# EUROPEAN PATENT APPLICATION

(11) **EP 4 391 449 A1**
(43) Date of publication of application: **26.06.2024**
(21) Application number: 23202953.8
(22) Date of filing: 11.10.2023
(51) Int. Cl.: H04L 9/40, H04W 84/12

(54) **WIRELESS CLIENT GROUP ISOLATION WITHIN A NETWORK**

(30) Priority: 22.12.2022 US 202218087218
(71) Applicant: Arista Networks, Inc., Santa Clara, CA 95054 (US)
(72) Inventor: GUPTA, Anubhav, Santa Clara, 95054 (US); JONNALAGADDA, Venkata Ramchandra Murthy, Santa Clara, 95054 (US)
(74) Representative: Barton, Russell Glen

(57) **Abstract**

A network device can be configured to access device group information organizing host devices into different user or user-specific key groups. The network device may perform data link layer (L2) forwarding based on the accessible device group information.

## Description

This application claims priority to U.S. patent application No. 18/087,218, filed December 22, 2022, which is hereby incorporated by reference herein in its entirety.

### Background

A communication system includes multiple network devices that are interconnected to form a network for conveying data packets from source devices to destination devices. Devices of different users can communicate through the network. Each user can have multiple devices connected to the network and serving as the source and/or destination devices. In some applications and environments, it may be desirable to provide isolation between devices of different users.

### Brief Description of the Drawings

FIG. 1 is a diagram of an illustrative network to which host devices of different user groups and/or of a shared group are coupled in accordance with some embodiments.
FIG. 2 is a diagram of illustrative data link layer (L2) forwarding behavior between different host devices in accordance with some embodiments.
FIG. 3 is a diagram of illustrative user or key group information usable to provide forwarding behavior of the type shown in FIG. 2 in accordance with some embodiments.
FIGS. 4A and 4B are diagrams of an illustrative type of frames associated with network traffic to and from host devices of a shared group in accordance with some embodiments.
FIGS. 5A and 5B are diagrams of an illustrative type of frames associated with network traffic to and from gateway devices in accordance with some embodiments.
FIGS. 6A and 6B are diagrams of an illustrative type of frames associated with network traffic between host devices within the same user group in accordance with some embodiments.
FIG. 7 is a diagram of an illustrative type of frames associated with network traffic between host devices of different user groups in accordance with some embodiments.
FIG. 8 is a diagram of an illustrative type of frames associated with broadcast, unknown-unicast, or multicast (BUM) network traffic from host devices of a shared group in accordance with some embodiments.
FIG. 9A is a diagram of an illustrative type of frames associated with BUM network traffic from host devices of a user group in accordance with some embodiments.
FIGS. 9B and 9C are diagrams of an illustrative type of frames generated based on BUM network traffic of the type shown in FIG. 9A in accordance with some embodiments.
FIG. 10 is a diagram of an illustrative networking system having wireless access points communicatively coupled to external equipment that stores user or key group information in accordance with some embodiments.
FIG. 11 is a diagram of an illustrative network device and illustrative external equipment in accordance with some embodiments.
FIG. 12 is a flowchart of illustrative operations for processing frames based on user or key group information in accordance with some embodiments.

### Detailed Description

A network such as a local area network, a campus area network, etc., can convey network traffic, e.g., in the form of packets encapsulated by frames, for host devices belonging to different users. Each user may have a corresponding set of host devices coupled to network devices in the network such as wireless access points and, through these network devices, may be connected to an external network portion such as the Internet. In other words, these network devices may form an edge portion of the local area network or the campus area network through which the rest of the network and/or the Internet is accessible to the connected host devices. Each user may have a unique passcode or key (e.g., PSK (Pre-Shared Key)) used to authenticate a connection from any of that user's devices to the network.

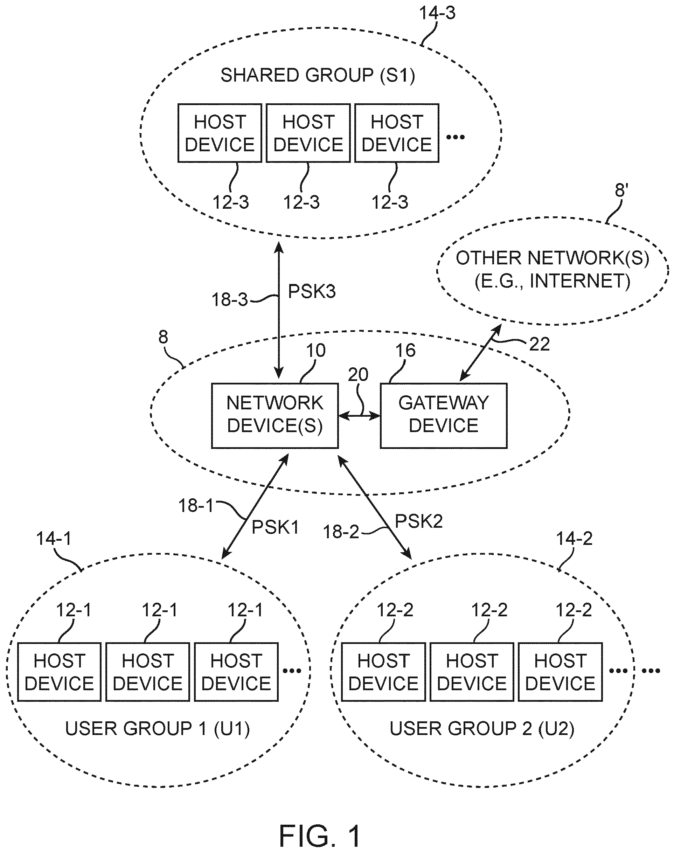

To maintain network security, the network devices such as wireless access points may desirably provide isolation between devices belonging to different users such that a device of a first user cannot communicate with a device of a second user through direct data link layer or layer 2 (L2) communication. While a different VLAN (virtual local area network) domain can be assigned to each user's unique key and devices such that the network devices can implement VLAN isolation, this configuration can be difficult to deploy and manage and may not be scalable when the number of users exceeds a certain threshold (e.g., the number of available VLAN IDs). To provide the isolation between devices belonging to different users without inherently involving multiple VLAN domains (e.g., provide the user-group-to-user-group isolation within a single VLAN domain), network devices such as the wireless access points may process L2 traffic based on user group and/or shared group information such as hardware addresses for devices within different user groups. The information for each user group may identify devices belonging to the same user and using the same passcode or key for authenticating the network connection. An illustrative network in which user-group-to-user-group isolation may be implemented is shown in FIG. 1.

FIG. 1 is a diagram of an illustrative communications network 8. Network 8 may be implemented with any suitable scope (e.g., as a campus area network, as a local area network (LAN), as a virtual local area network (VLAN) domain, etc.). As an example, network 8 may include a wired network portion based on wired technologies or standards such as Ethernet (e.g., using copper cables and/or fiber optic cables) and a wireless network portion such as wireless local area network (WLAN) or Wi-Fi networks. If desired, network 8 may also include internet service provider networks (e.g., the Internet) or other public service provider networks, private service provider networks (e.g., multiprotocol label switching (MPLS) networks), and/or may other types of networks such as telecommunication service provider networks (e.g., a long-term evolution (LTE) network).

Network 8 may be implemented using one or more network devices 10 that handle network traffic such as the processing of layer 2 (L2) network frames encapsulating network packets for conveying information for user applications and/or other processes between different end hosts (e.g., between, to, and/or from host devices 12-1, 12-2, 12-3, etc.). In general, network 8 can include network equipment forming a variety of network devices 10 that interconnect end host devices 12 of network 8. Network devices 10 may include one or more wireless access points, one or more switches, one or more bridges, one or more routers, one or more hubs, one or more repeaters, one or more firewalls, one or more devices serving other networking functions, one or more devices that include the functionality of two or more of these devices, and management equipment that manage and control the operation of one or more of these network devices. Host devices 12 (e.g., any of host device 12-1, 12-2, 12-3, etc.) can include computers, servers, portable electronic devices such as cellular telephones, laptops, etc., network service devices, management equipment that manage and control the operation of one or more of other host devices 12 and/or network devices 10, and any other suitable types of specialized or general-purpose host computing equipment, e.g., each running one or more client-side and/or server-side applications.

Host devices 12 may be organized in user groups. Each user group may contain a group of devices belonging to the same user. In particular, each user may have any suitable number of host devices 12. Each user may also be provided with or generally associated with a single unique user-specific key or passcode (e.g., a Pre-Shared Key (PSK)) and/or other unique user-specific information (e.g., information indicative of or identifying the user) to authenticate a network connection to network 8. Each of a user's host devices 12 may be configured to communicatively connect to network 8 using the same user-specific key (e.g., PSK) for authenticating the network connection.

In the example of FIG. 1, each host device 12-1 may convey key PSK1 to a corresponding wireless access point (e.g., network device 10) to authenticate the connection being requested by host device 12-1. Accordingly, host devices 12-1 may form user group 14-1 of devices belonging to the same first user (sometimes referred to herein as user group 1 or U1). Each host device 12-1 may communicatively and wirelessly couple to the same or different access points in network 8 to communicatively connect to the rest of network 8 and/or external network 8'. Regardless of the access point to which each host device 12-1 is connected, the same key PSK1 associated with the same first user may be used to authenticate the initial connection. In other words, each of wireless communications links 18-1 established between a host device 12-1 and a corresponding access point may be based on a verification of key PSK1 (e.g., verifying that the user associated with PSK1 is authorized to connect to network 8).

In a similar manner, a second set of host devices 12-2 may belong to the same second user and form a second user group 14-2 of devices (sometimes referred to herein as user group 2 or U2). Each host device 12-2 may convey key PSK2 to a corresponding access point to authenticate the connection being requested by host device 12-2. Each host device 12-2 may communicatively and wirelessly couple to the same or different access points in network 8 to communicatively connect to the rest of network 8 and/or external network 8'. Regardless of the access point to which each host device 12-2 is connected, the same key PSK2 associated with the same second user may be used to authenticate the initial connection. In other words, each of communications links 18-2 established between a host device 12-2 and a corresponding network device 10 may be based on a verification of key PSK2 (e.g., verifying that the user associated with PSK2 is authorized to connect to network 8).

In the example of FIG. 1, shared host devices 12-3 (sometimes referred to herein as shared group 1 or S1) may belong to a shared group 14-3 of host devices in network 8. While host devices in user groups such as user groups U1 and U2 may include personal (user) devices such as cellular telephones, laptops, computers, personal printers, etc., host devices in a shared group such as shared group S 1 may include host devices shared by multiple users connected to network 8 such as network printers, network displays, network computing and/or storage resources, etc., that are accessible by multiple users. Host devices 12-3 may be coupled via communication links 18-3 to the same or different network devices 10 and thereby be accessible by other user host devices through network 8. The shared host devices 12-3 may communicatively connect to network 8 with an administrator-specific key such as Pre-Shared Key PSK3 or may communicatively connect to network 8 without any keys.

Configurations in which the one or more edge network devices 10 are wireless access points and communication links 18-1, 18-2, 18-3 are corresponding wireless communication links between one or more host devices 12-1, 12-2, 12-3 and one or more wireless access points are sometimes described herein as illustrative examples. Accordingly, the corresponding user-specific keys may be conveyed through these wireless communication links for authentication and validation.

Network 8 may include one or more gateway devices such as gateway device 16 that controls and/or monitors network traffic to and from an external network 8' such as the Internet. In one illustrative arrangement, host devices 12-1, 12-2, and/or 12-3 may belong to (e.g., be configured as) a single VLAN domain or a LAN segment in network 8. If desired, network 8 may be a campus area network or a local area network that is communicatively coupled to other campus area networks and/or local area networks via gateway device 16 and external network 8'. As an example, gateway device 16 may be a network gateway router or generally a LAN/VLAN gateway device that connects the LAN segment or VLAN domain, to which host devices 12-1, 12-12, 12-3 belong, to network portions external to the LAN segment or VLAN domain. In particular, network traffic between host devices 12-1, 12-2, and 12-3 and external network 8' may be conveyed via respective wireless communications links 18-1, 18-2, and 18-3, wired network paths 20 through one or more network devices 10, and gateway device 16.

While FIG. 1 shows three host devices in each of user group 14-1, user group 14-2, and shared group 14-3, this configuration is merely illustrative. If desired, any number of user groups, each having any number of suitable host devices, may be communicatively connected to network 8 using corresponding user-specific keys for authentication. Network 8 may include any number of wireless access points which can serve as edge network devices through which one or more of these host devices can connect to network 8.

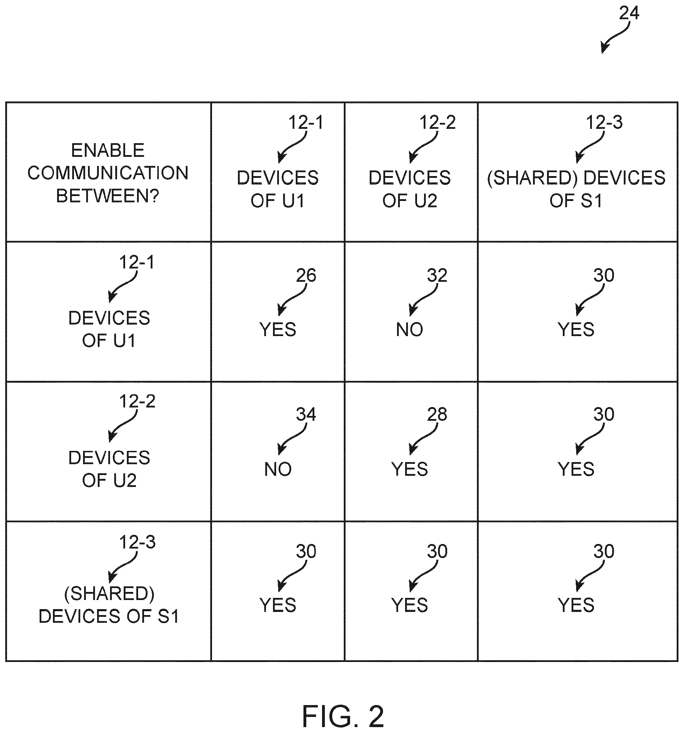

In the example in which host devices 12-1, 12-2, and 12-3 are end hosts on the same LAN segment or in the same VLAN domain and/or in other illustrative configurations, it may be desirable to provide data link layer (L2) network isolation functionalities between pairs of host devices between different users. FIG. 2 shows a table 24 of illustrative L2 forwarding characteristics enforced at one or more network devices to provide selective L2 isolation between host devices coupled to the same LAN segment or VLAN domain. In particular, table 24 shows L2 forwarding behavior that may be enforced at intervening L2 network devices (e.g., one or more of network devices 10 between hosts 12 in network 8) such as wireless access points, switches having L2 (and L3) functionalities, etc. to provide L2 isolation between host device 12 belonging to different user groups (e.g., as described in connection with FIG. 1). When referred to herein, L2 network devices refer to any devices containing L2 processing modules that can handle the reception and processing of L2 frames. These L2 network devices may also include L3 or other processing functionalities, if desired.

As shown in FIG. 2, intervening L2 network devices may enable L2 communication and therefore forward L2 traffic between host devices belonging to the same user group (e.g., between a first host device 12-1 and a second host device 12-1 in a first user group U1 as indicated by entry 26, between a first host device 12-2 and a second host device 12-2 in user group U2 as indicated by entry 28, etc.). In other words, L2 traffic (e.g., frames) having source and destination hardware (e.g., MAC (Media Access Control)) addresses associated with respective host devices belonging to the same user may be forwarded.

L2 network devices may also enable L2 communication and therefore forward L2 traffic to and/or from host devices belonging to the shared group (e.g., between any host device in groups U1, U2, or S1 and a host device in shared group S1 as indicated by entries 30). In other words, L2 traffic (e.g., frames) having at least one of a source hardware (e.g., MAC) address and a destination hardware (e.g., MAC) address associated with a host device belonging to shared group S1 may be forwarded.

L2 network devices may also disable or prevent L2 communication and therefore drop L2 traffic between host devices belonging to different user groups (e.g., from a host device 12-1 in user group U1 to a host device 12-2 in a first user group U2 as indicated by entry 32, from a host device 12-2 in user group U2 to a host device 12-1 in user group U1 as indicated by entry 34, etc.). In other words, L2 traffic (e.g., frames) having source and destination hardware (e.g., MAC) addresses associated with respective host devices belonging to different users or user groups may be dropped.

The illustrative L2 forwarding behavior described in FIG. 2 is merely illustrative. If desired, other types of L2 forwarding policy can be enforced at intervening L2 network devices to provide other L2 forwarding behavior instead of or in addition to the illustrative behavior shown in FIG. 2.

To efficiently provide L2 forwarding policy between host devices on the same LAN segment or VLAN domain, network devices 10 may make use of user-specific keys such as PSKs (Pre-Shared Keys) or other user-identifying information used to authenticate or otherwise establish connections to network 8 to inform and enforce L2 forwarding behavior. The use of user-specific keys in providing the desired L2 forwarding behavior such as L2 isolation between host devices of different users as illustrated in FIG. 2 allows for a scalable and easily manageable scheme to provide desired L2 forwarding and/or isolation even in network configurations where the number of user groups is on the order of thousands or even more.

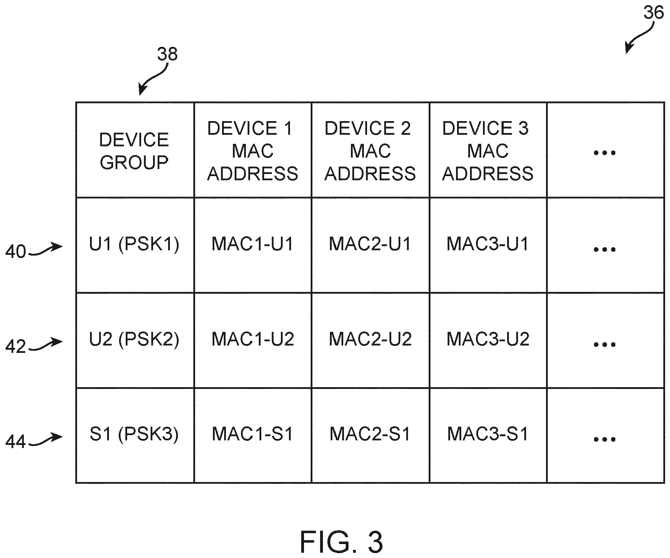

FIG. 3 shows a table 36 of illustrative user-identifying information such as PSK information that can be used and/or stored at the one or more network devices 10 (e.g., at L2 or MAC forwarding tables in these L2 network devices 10) to enable forwarding decisions that provide the desired L2 forwarding behavior as illustrated in FIG. 2.

In particular, one or more L2 network devices 10 for handling L2 traffic such as one or more wireless access points can store some or all of the information in table 36. Table 36 includes a list of device groups in column 38. As shown in FIG. 3, the device groups may include a first user group U1 containing host devices belonging to a first user and a second user group U2 containing host devices belonging to a second user. The device groups may similarly include other user groups each containing host devices belonging to the same user. The device groups may also include a shared group S1 containing host devices that serve as shared resources for the network and/or are accessible to all users and their devices on the network as a shared pool of host devices. If desired, shared group S1 may serve as shared resources for only a portion of the network (e.g., a set of host devices meeting one or more given criteria such as a network address criterion, a user group criterion, etc.) and/or are accessible to only some of the users and their devices on the network as a (partially) shared pool of host devices.

Along with each device group, table 36 may also include a list of hardware (e.g., MAC) addresses of host devices belonging to each corresponding device group. In example of FIG. 3, (row) entry 40 identifies a first user group U1 and three corresponding devices 12-1 (FIG. 1) belonging to user group U1. In particular, the three corresponding devices 12-1 may have MAC addresses MAC1-U1, MAC2-U1, and MAC3-U1, respectively, stored as part of entry 40. As another example, (row) entry 42 identifies a second user group U2 and three corresponding devices 12-2 (FIG. 1) belonging to user group U2. The three corresponding devices 12-2 may have MAC addresses MAC1-U2, MAC2-U2, and MAC3-U2, respectively, stored as part of entry 42. Additionally, user group information (e.g., for host devices in the same VLAN domain) associated with other user groups and the MAC addresses of the devices contained therein may be similarly stored in table 36 as additional (row) entries. As yet another example, (row) entry 44 identifies a shared group S1 and three corresponding devices 12-3 (FIG. 1) belonging to shared group S 1. The three corresponding devices 12-3 may have MAC addresses MAC1-S1, MAC2-S1, and MAC3-S1, respectively, stored as part of entry 44.

In some illustrative configurations described herein as an example, the information in table 36 may be populated based on user PSKs used to authenticate network connection to network 8. In particular, because a user host device (sometimes referred to herein as a wireless client device in this context) may be required to provide a wireless access point with a Pre-Shared Key to authenticate its network connection to network 8, the Pre-Shared Key may be used as user-identifying information to identify the device group or user group to which the user host device belongs.

For example, a device 12-1 having MAC address MAC1-U1, a device 12-1 having MAC address MAC2-U1, and a device 12-1 having MAC address MAC3-U1 may all authenticate their wireless connection to the wireless network portion (identifiable by a service set identifier or Wi-Fi network name) via one or more access points and ultimately to network 8 by providing the same Pre-Shared Key PSK1 for authentication (e.g., at an authentication or provisioning server that ultimately receives PSK1 and authorizes the network connection). Based on the use of the same key PSK1, table 36 may be populated, at entry 40, with device group information indicating that these three devices 12-1 (identifiable by their MAC addresses) belong to the same user group U1, which is sometimes referred to herein as a PSK group in configurations where the host devices therein all use the same unique PSK to authenticate their network access.

Similarly, a device 12-2 having MAC address MAC1-U2, a device 12-2 having MAC address MAC2-U2, and device 12-2 having MAC address MAC3-U2 may all authenticate their wireless connection to the wireless network portion (identifiable by the service set identifier or Wi-Fi network name) via one or more access points and ultimately to network 8 by providing the same Pre-Shared Key PSK2 for authentication (e.g., at an authentication or provisioning server that ultimately receives PSK2 and authorizes the network connection). Based on the use of the same key PSK2, table 36 may be populated, at entry 42, with device group information indicating that these three devices 12-2 (identifiable by their MAC addresses) belong to the same user group U2 (sometimes referred to herein as a PSK group).

In scenarios in which shared devices 12-3 also utilize Pre-Shared Key PSK3 (e.g., a network administrator PSK) to authenticate their network access, table 36 may be populated, at entry 44, with device group information indicating that corresponding devices 12-3 (identifiable by their MAC addresses) belong to the same shared group S1 (sometimes referred to herein as a PSK group). In other scenarios (e.g., in which no PSK is used to authenticate the network access of shared devices to network 8), table 36 may be populated with device group information for the same shared group S1 based on other input (e.g., based on network administrator input).

The device group information shown in FIG. 3 is merely illustrative. In particular, the device group information is shown in tabular form to illustrate a list of device groups such as user group U1, user group U2, shared group S1 and the host devices identifiable with and associated with each device group. In general, one or more network devices 10 may store some or all of the device group information in table 36 in any suitable manner (e.g., in a non-tabular form) such that each host device and the device group or PSK group to which that host device belongs is indicated.

One or more intervening L2 network devices in network devices 10 (L2 network devices 10) handling L2 forwarding between host devices 12 such as one or more wireless access points and/or switches may store some or all of the device group information shown in FIG. 3. These intervening L2 network devices may receive L2 frames from host devices 12 and process the frames based on matching or generally comparing the frame headers to the device group information.

In general, any suitable L2 forwarding policy may be implemented at the one or more intervening L2 network devices based on the device group information (e.g., PSK group information) as described in connection with FIG. 3. Configurations in which user-group-to-user-group isolation (e.g., the L2 forwarding behavior illustrated in FIG. 2) is implemented by the intervening L2 network devices 10 are sometimes described herein as an illustrative example.

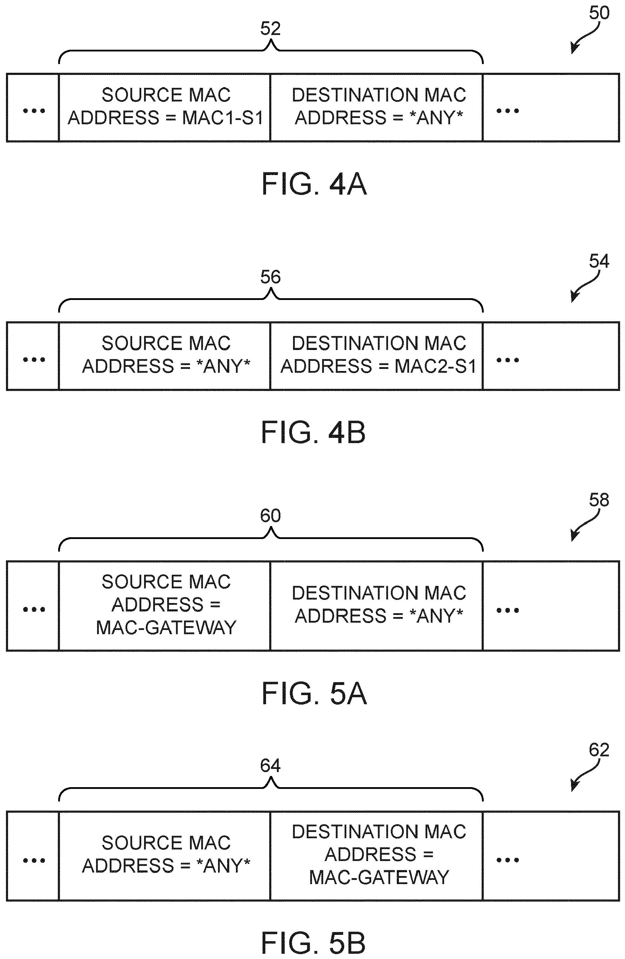

FIGS. 4A, 4B, 5A, 5B, 6A, and 6B show illustrative types of frames (e.g., packets encapsulated by frame headers such as source MAC address and destination MAC address) that may be forwarded by the one or more L2 network devices in network devices 10 handling L2 traffic processing to implement user-group-to-user-group isolation based on the device group information depicted in FIG. 3.

FIG. 4A shows an illustrative type of L2 (e.g., Ethernet) frames 50 with frame header information 52 identifying a source MAC address of a device in the shared domain S1 (e.g., MAC1-S1 in the example of FIG. 4A and MAC2-S 1, MAC3-S 1, etc. in other examples). These types of frames 50 may have the MAC address of any user device (e.g., MAC1-U1, MAC2-U1, MAC1-U2, MAC2-U2, etc.) as their destination MAC addresses. An L2 network device 10 that receives a frame 50 may be configured to access device group information such as the information in entry 44 in FIG. 3. The device group information may be stored locally on the L2 network device 10 and/or stored on an external network device or external equipment and be accessible via a network path.

Upon receiving a frame 50, the L2 network device 10 may process the received frame. The L2 network device 10 may compare the source MAC address of frame 50 to the MAC addresses of devices 12-3 in shared device group S1 (e.g., to one of the devices indicated in entry 44 in FIG. 3) or generally perform a lookup operation of the source MAC address within the device group information. As an example, the MAC addresses of devices 12-3 in shared device group S1 may form part of one or more matching criteria for the frame source MAC address field and/or may be stored as part of a match-and-action (e.g., forward if match) entry in an L2 forwarding table on the L2 network device 10. In particular, based on a matching result of the comparison or lookup operation, the L2 network device 10 may forward these types of frames 50 (e.g., frames having a source MAC address matching the MAC addresses of devices 12-3 in shared device group S1) to provide the desired forwarding characteristics illustrated in FIG. 2 (e.g., entries 30 in FIG. 2). The L2 network device 10 may forward these types of frames 50 from an input L2 interface to an output L2 interface with or without additional (e.g., L3) processing of the frame.

FIG. 4B shows an illustrative type of L2 frames 54 with frame header information 56 identifying a destination MAC address of a device in the shared domain S1 (e.g., MAC2-S1 in the example of FIG. 4B and MAC1-S1, MAC3-S1, etc. in other examples). These types of frames 54 may have the MAC address of any user device (e.g., MAC1-U1, MAC2-U1, MAC1-U2, MAC2-U2, etc.) as their source MAC addresses. An L2 network device 10 that receives a frame 54 may be configured to access device group information such as the information in entry 44 in FIG. 3.

Upon receiving a frame 54, the L2 network device 10 may process the received frame. The L2 network device 10 may compare the destination MAC address of frame 54 to the MAC addresses of devices 12-3 in shared device group S1 (e.g., to one of the devices indicated in entry 44 in FIG. 3) or generally perform a lookup operation of the source MAC address within the device group information. As an example, the MAC addresses of devices 12-3 in shared device group S1 may form part of one or more matching criteria for the frame destination MAC address field and/or may be stored as part of a match-and-action (e.g., forward if match) entry in an L2 forwarding table on the L2 network device 10. In particular, based on a matching result of the comparison or lookup operation, the L2 network device 10 may forward these types of frames 54 (e.g., frames having a destination MAC address matching the MAC addresses of devices 12-3 in shared device group S1) to provide the desired forwarding characteristics illustrated in FIG. 2 (e.g., entries 30 in FIG. 2). The L2 network device 10 may forward these types of frames 54 from an input L2 interface to an output L2 interface with or without additional (e.g., L3) processing of the frame.

FIG. 5A shows an illustrative type of L2 frames 58 with frame header information 60 identifying a source MAC address MAC-GATEWAY of a gateway device 16 (FIG. 1) such as a network gateway router. These types of frames 58 may have the MAC address of any user device (e.g., MAC1-U1, MAC2-U1, MAC1-U2, MAC2-U2, etc.) as their destination MAC addresses. An L2 network device 10 that receives a frame 58 may be configured to access gateway device information identifying MAC addresses of one or more (e.g., all) gateway devices connecting network 8 to other networks or network portions. The gateway device information may be stored locally on network device 10 and/or stored on an external network device or external equipment and be accessible via a network path. If desired, the gateway device information may be stored as part of the information for the set of shared devices in entry 44 (FIG. 3).

Upon receiving a frame 58, the L2 network device 10 may process the received frame. The L2 network device 10 may compare the source MAC address of frame 58 to the MAC address of a gateway device based on the gateway device information or generally perform a lookup operation of the MAC address within the device group information (e.g., containing the gateway device information). As an example, the MAC addresses of one or more gateway devices may form part of one or more matching criteria for the frame source MAC address field and/or may be stored as part of a match-and-action (e.g., forward if match) entry in an L2 forwarding table on the L2 network device 10. In particular, based on a matching result of the comparison or lookup operation, the L2 network device 10 may forward these types of frames 58 (e.g., frames having a source MAC address matching a network gateway MAC address) such that network traffic from external network 8' (e.g., Internet) and destined for host devices belonging to network 8 may be conveyed from the gateway device. The L2 network device 10 may forward these types of frames 58 from an input L2 interface to an output L2 interface with or without additional (e.g., L3) processing of the frame.

FIG. 5B shows an illustrative type of L2 frames 62 with frame header information 64 identifying a destination MAC address MAC-GATEWAY of a gateway device 16 (FIG. 1). These types of frames 62 may have the MAC address of any user device (e.g., MAC1-U1, MAC2-U1, MAC1-U2, MAC2-U2, etc.) as their source MAC addresses. An L2 network device 10 that receives a frame 62 may be configured to access gateway device information identifying MAC addresses of one or more (e.g., all) gateway devices connecting network 8 to other networks or network portions. The gateway device information may be stored locally on the L2 network device 10 and/or stored on an external network device or external equipment and be accessible via a network path. If desired, the gateway device information may be stored as part of the information for the set of shared devices in entry 44 (FIG. 3).

Upon receiving a frame 62, the L2 network device 10 may process the received frame. The L2 network device 10 may compare the destination MAC address of frame 62 to the MAC address of a gateway device based on the gateway device information or generally perform a lookup operation of the MAC address within the device group information (e.g., containing the gateway device information). As an example, the MAC addresses of one or more gateway devices may form part of one or more matching criteria for the frame destination MAC address field and/or may be stored as part of a match-and-action (e.g., forward if match) entry in an L2 forwarding table on the L2 network device 10. In particular, based on a matching result of the comparison or lookup operation, the L2 network device 10 may forward these types of frames 62 (e.g., frames having a destination MAC address matching a network gateway MAC address) such that network traffic from host devices belonging to network 8 and destined for external network 8' (e.g., Internet) may be conveyed to the gateway device. The L2 network device 10 may forward these types of frames 62 from an input L2 interface to an output L2 interface with or without additional (e.g., L3) processing of the frame.

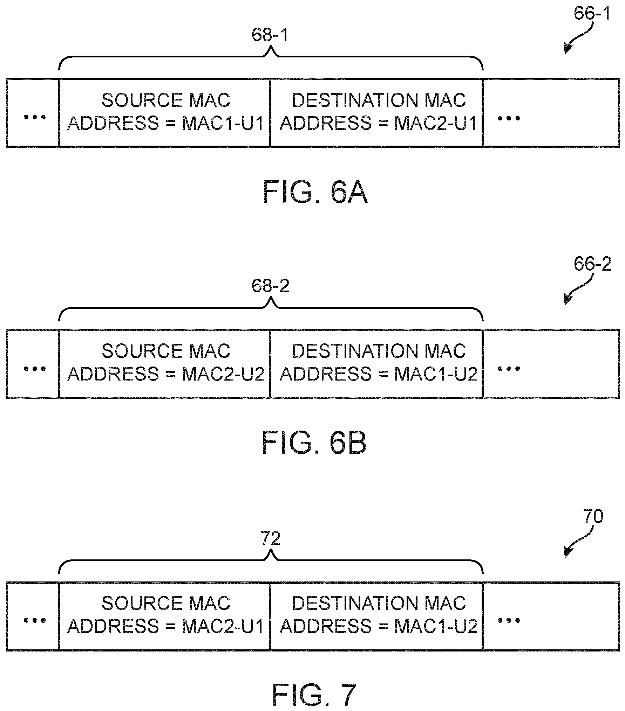

FIGS. 6A and 6B show an illustrative type of L2 frames 66 (e.g., containing frame 66-1 in FIG. 6A and frame 66-2 in FIG. 6B) with corresponding frame header information 68 identifying a source MAC address and a destination MAC address of two illustrative devices in the same user or key (e.g., PSK) group. In the example of FIG. 6A, frame 66-1 includes frame header information 68-1 identifying source and destination MAC addresses MAC1-U1 and MAC2-U1 belonging to the same user group U1. In the example of FIG. 6B, frame 66-2 includes frame header information 68-2 identifying source and destination MAC addresses MAC2-U2 and MAC1-U2 belonging to the same user group U2. These types of frames 66 may generally include the source and destination MAC addresses of any pair devices in the same user or key group. An L2 network device 10 that receives a frame 66 (e.g., frame 66-1, frame 66-2, or other examples of frames 66) may be configured to access device group information such as the device information in entries 40 and 42 in FIG. 3.

Upon receiving a frame 66, the L2 network device 10 may process the received frame. The L2 network device 10 may determine whether the source MAC address and destination MAC address of frame 66 are of devices in the same user device or key group (e.g., user device group U1, U2, or another user device group) based on device group information such as the device information in entries 40 and 42 in FIG. 3. This determination may be made based on one or more comparison operations, one or more lookup operations, and/or one or more other operations based on the source MAC address and destination MAC address of frame 66 and the device group information. As examples, the L2 network device may generally look up the source MAC address and destination MAC address in the device group information and/or may include L2 forwarding entries or L2 forwarding policy information that reference the device group information. If desired, the MAC addresses of devices 12-1, 12-2, and other user devices 12 may form part of one or more matching criteria for the frame source and destination MAC address fields and/or may be stored as part of match-and-action (e.g., forward if match) entries in an L2 forwarding table on the L2 network device 10.

In response to determining that the source MAC address and destination MAC address of frame 66 are of devices in the same user device or key group, the L2 network device 10 may forward these types of frames 66 (e.g., frames having source and destination MAC addresses in the same user or key group) to provide the desired forwarding characteristics illustrated in FIG. 2 (e.g., entries 26 and 28 in FIG. 2). The L2 network device 10 may forward these types of frames 66 from an input L2 interface to an output L2 interface at network device 10 with or without additional (e.g., L3) processing of the frame.

Other types of frames such as those having a source MAC address of a device in a first user or key group (e.g., user group U1) and a destination MAC address of a device in a second user or key group (e.g., a user group that is not U1 such as user group U2) may be dropped by a L2 network device 10. In particular, FIG. 7 shows an illustrative type of L2 frames 70 with corresponding frame header information 72 identifying a source MAC address and a destination MAC address of two illustrative devices in different user or key groups. In the example of FIG. 7, frame header information 72 identifies a source MAC address of a host device 12-1 (FIG. 1) in user group U1 and a destination MAC address of a host device 12-2 (FIG. 1) in user group U2. These types of frames 70 may generally include the source and destination MAC addresses of any pair devices in different user or key groups. An L2 network device 10 that receives a frame 70 may be configured to access device group information such as the information in entries 40 and 42 in FIG. 3.

Upon receiving a frame 70, the L2 network device 10 may process the received frame. The L2 network device may determine whether the source MAC address and destination MAC address of frame 70 are of devices in different user or key groups based on device group information such as the device information in entries 40 and 42 in FIG. 3. This determination may be made based on one or more comparison operations, one or more lookup operations, and/or one or more other operations based on the source MAC address and destination MAC address of frame 70 and the device group information. As an example, the L2 network device may compare the source MAC address to one or more devices in entry 40 in FIG. 3 and may compare the destination MAC address to one or more devices in entry 42 in FIG. 3. In response to determining that the source MAC address and destination MAC address of frame 70 are of devices in different user device or key group, network device 10 may drop frames 70 (e.g., frames having source and destination MAC addresses in different user or key group) or otherwise prevent frames 70 from reaching their destinations to provide the desired forwarding characteristics illustrated in FIG. 2 (e.g., entries 32 and 34 in FIG. 2).

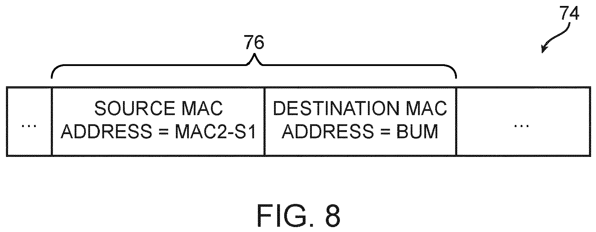

In some instances, L2 network devices 10 may receive and handle processing of BUM (broadcast, unknown unicast, or multicast) frames from host devices in network 8 in the same LAN segment or VLAN domain. FIG. 8 shows an illustrative type of L2 BUM frames 74 with corresponding frame header information 76 identifying a source MAC address of a host device 12-3 in the shared device group S1. These types of frames 74 may have broadcast, unknown unicast, or multicast destination MAC addresses (e.g., generally identifying or indicating multiple destinations). An L2 network device 10 that receives a frame 74 may be configured to access device group information such as the information in entry 44 in FIG. 3. The device group information may be stored locally on the L2 network device 10 and/or stored on an external network device or external equipment and be accessible via a network path.

Upon receiving a frame 74, the L2 network device 10 may process the received frame. The L2 network device 10 may determine that the source MAC address of frame 74 is the same as one of the MAC addresses of devices 12-3 (FIG. 1) in shared device group S1 based on the device group information (e.g., one of the devices indicated in entry 44 in FIG. 3). This determination may be made based on one or more comparison operations such as comparing the source MAC address of frame 74 to the MAC addresses of devices 12-3 in shared device group S1, one or more lookup operations such as looking up the source MAC addresses of frame 74 in the device group information, and/or one or more other operations based on the source MAC address of frame 74 and the device group information. If desired, the MAC addresses of devices 12-3 in shared device group S1 may form part of one or more matching criteria for the frame source MAC address field and/or may be stored as part of a match-and-action (e.g., forward if match) entry in an L2 forwarding table on network device 10.

Based on this determination, the L2 network device 10 may forward these types of frames 74 (e.g., frames having a source MAC address matching the MAC addresses of devices 12-3 in shared device group S1) to provide the desired forwarding characteristics illustrated in FIG. 2 (e.g., entries 30 in FIG. 2). The L2 network device 10 may forward these types of frames 74 from an input L2 interface to an output L2 interface at network device 10 with or without additional processing of the frame.

If desired, L2 network device 10 may process and handle forwarding of frames 74 in a similar manner as frames 50 in FIG. 4A. In particular, regardless of whether these frames (having source MAC addresses of host devices in the shared group S 1) are unicast in the example of FIG. 4A or are BUM frames in the example of FIG. 7, the L2 network device 10 may simply refer to the source MAC address before determining that these frames should be forwarded.

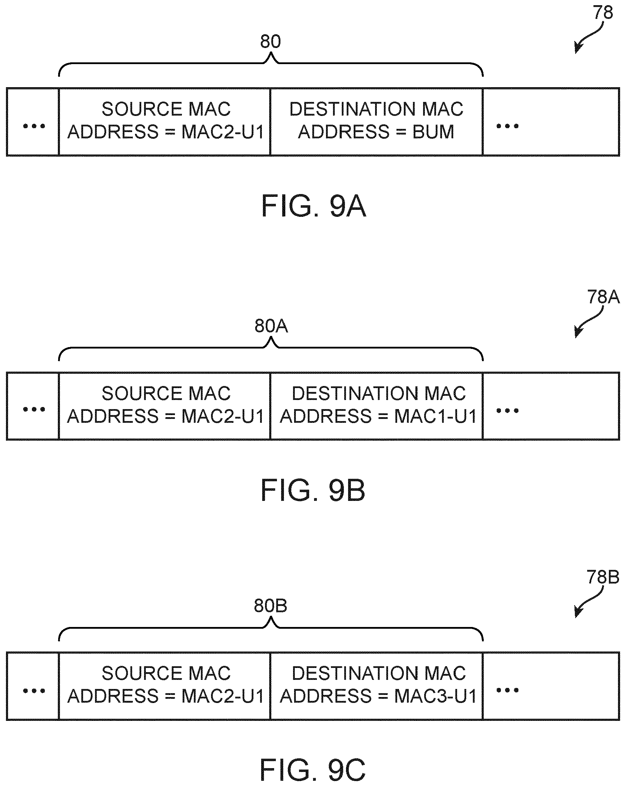

In some instances, L2 network devices 10 may receive and handle processing of BUM frames from host devices in different user groups in the same LAN segment or VLAN domain. FIG. 9A shows an illustrative type of L2 BUM frames 78 with corresponding frame header information 80 including a source MAC address of a host device in a user or key (PSK) group. In the example of FIG. 9A, frame 78 may have a source MAC address MAC2-U1 of a host device 12-1 in user group U1. If desired, frames 78 may each generally have a source MAC address of any host device in a (non-shared) user group (e.g., user group U2, a non-U1 and non-U2 user group). These types of frames 78 may have a broadcast, unknown unicast, or multicast destination MAC address (e.g., generally identifying or indicating multiple destinations). An L2 network device 10 that receives a frame 78 may be configured to access device group information such as the device information in entries 40 and 42 in FIG. 3. The device group information may be stored locally on the L2 network device 10 and/or stored on an external network device or external equipment and be accessible via a network path.

Upon receiving a frame 78, the L2 network device 10 may process the received frame. The L2 network device may determine that the source MAC address of frame 78 is of host devices in a user group and not in a shared group (e.g., of one of the devices indicated in entry 40 or entry 42 in FIG. 3). This determination may be made based on one or more comparison operations such as comparing the source MAC address of frame 78 to the MAC addresses of devices 12 in user groups U1, U2, etc., one or more lookup operations such as looking up the source MAC address of frame 78 in the device group information, and/or one or more other operations based on the source MAC address of frame 78 and the device group information. Based on this determination, the L2 network device 10 may convert frame 78 into one or more unicast frames for further forwarding to provide user-group-to-user-group isolation (e.g., characteristics associated with entries 32 and 34 in FIG. 2). In other words, the L2 network device 10 may drop BUM frame 78 and may instead output the one or more unicast frames in the place of dropped frame 78.

FIGS. 9B and 9C are illustrative replacement unicast frames generated and output by network device 10 to replace the illustrative BUM frame 78 having a source MAC address of MAC2-U1 in the example of FIG. 9A in scenarios where the U1 group contains only these three host devices (e.g., with MAC addresses MAC1-U1, MAC2-U1, and MAC3-U1).

In particular, FIG. 9B shows an illustrative unicast frame 78A having corresponding frame header information 80A including a source MAC address that is the same as that of BUM frame 78 in FIG. 9A. Instead of containing an indication of BUM destinations as in frame 78, frame header information 80A may include a destination MAC address MAC1-U1 that is of another host device 12-1 in user group U1 (e.g., the same group to which the source device belongs to).

FIG. 9C shows an illustrative unicast frame 78B having corresponding frame header information 80B including a source MAC address that is the same as that of BUM frame 78 in FIG. 9A. Instead of containing an indication of BUM destinations as in frame 78, frame header information 80B may include a destination MAC address MAC3-U1 that is of yet another host device 12-1 in user group U1 (e.g., the same group to which the source device belongs to).

In scenarios in which the user group contains additional host devices, further additional unicast frames can be generated and output by the L2 network device 10. In general, the resulting equivalent unicast frame(s) may be unicast frames covering all destination MAC addresses within the same user group as the source host device. In the case of frames 78 with multicast destinations, replacement unicast frame(s) having destinations originally excluded from the multicast destinations may not be generated nor output (e.g., may be omitted).

If desired, a group-wise transient key (e.g., shared by host devices in user group U1 but unknown to other devices in other groups) may be used to encrypt BUM frames 78 instead of or in addition to converting each BUM frame into unicast frame(s) as described in connection with FIGS. 9A-9C. In such a manner, even when devices outside of the same user group receive the BUM frames 78, they may be unable to decrypt these BUM frames 78, thereby still providing user-group-to-user-group isolation.

Any suitable number of network devices and/or equipment may be used to enable the use of user-specific key information (e.g., PSK group information) in performing L2 forwarding as described in connection with FIGS. 1-9. In some illustrative configurations described herein as an illustrative examples, an illustrative networking system containing one or more wireless access points (e.g., serving as the L2 network devices 10 described herein) and server equipment may be configured to implement L2 forwarding policy such as user-group-to-user-group isolation based on user-specific key information such as user or PSK group information.

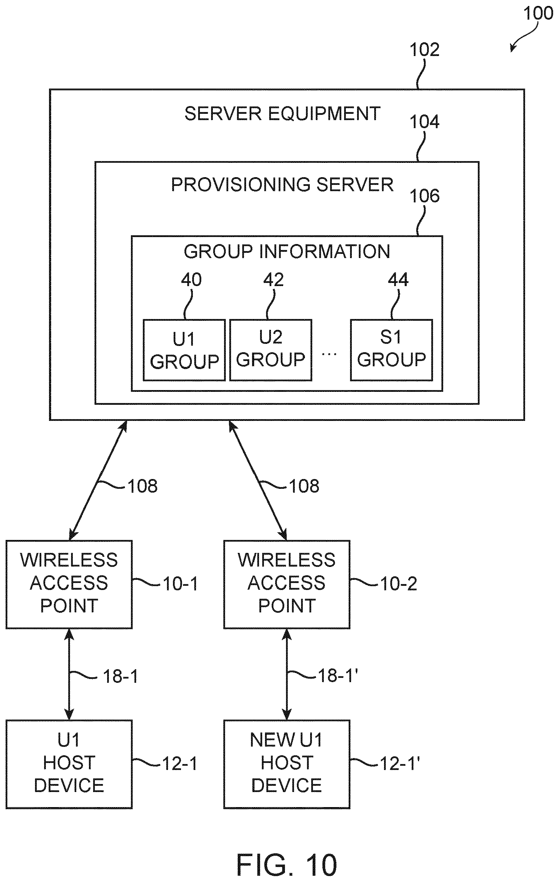

FIG. 10 is a diagram of an illustrative networking system 100 that includes server equipment 102 and one or more wireless access points such as wireless access points 10-1 and 10-2. In some configurations described herein as an illustrative example, different components within networking system 100 may store the device group information depicted in FIG. 3 and/or handle L2 frame processing based on the device group information.

Server equipment 102, or if desired, other types of host computing equipment may be used to implement a network access authentication system. In particular, the network access authentication system may use provisioning server 104 such as a Remote Authentication Dial-In User Service (RADIUS) server implementing the RADIUS protocol to authenticate network access. If desired, other protocols for providing authentication, authorization, and accounting functions to manage user access to a network may be used to implement provisioning server 104. Provisioning server 104 or other parts of server equipment 102, or non-server host equipment may be configured to store device group information 106 such as the device group information depicted in table 36 in FIG. 3. As shown in FIG. 10, the device group information may include device information for user group U1, user group U2, any other user groups, and a shared device group S1. Similar to the information in table 36 (FIG. 3), device information 40 for user group U1 may include a list of devices (e.g., identified by their MAC addresses) that belong to user group U1, device information 42 for user group U2 may include a list of devices (e.g., identified by their MAC addresses) that belong to user group U2, etc. Device information 44 for shared group S1 may include a list of shared devices (e.g., identified by their MAC addresses) that belong to shared group S1. In particular, all of the known device group information (e.g., MAC addresses of devices belonging to each user- or key-specific group and MAC addresses of shared devices) may be stored in a database accessible by provisioning server 104.

In some illustrative configurations described herein as an example, the provisioning server may be a user PSK (UPSK) server configured to provision and/or onboard host devices to connect these host devices to network 8 based on PSK. In this configuration, device group information 106 may maintain a list of users, their corresponding PSKs, and a corresponding list of each user's devices. Because each PSK uniquely maps to the corresponding user, each user device may be determined to belong to a corresponding user group or PSK group.

While provisioning server 104 may store and maintain all of device group information 106 for all possible users and their corresponding user or PSK groups, it may be desirable to only provide a subset of this information (e.g., only the most relevant device group information) to each L2 network device or wireless access point, thereby avoiding an unnecessarily large amount of information to be locally stored on each wireless access point while still enabling each wireless access point to perform the desired L2 forwarding based on relevant device group information. Each wireless access point may receive and store (e.g., cache for a desired amount of time) only the most relevant group information such as MAC addresses of devices in groups of already-connected and/or recently-connected host devices and MAC address of the shared devices in shared group S 1.

In particular, one or more wireless access points such as access points 10-1 and 10-2 may be communicatively coupled to provision server 104 or generally server equipment 102 via one or more network links 108 to receive the device group information. Network links 108 may include additional network devices 10 (FIG. 1) such as switches, routers, gateways, etc. in network 8 and/or external to network 8. In particular, while not explicitly shown in FIG. 10, wireless access points 10-1 and 10-2 may connect host devices 12 to other network devices 10 such as switches, routers, bridges, gateway devices, etc., in network 8 and to an external network 8' through these other network devices 10.

In the example of FIG. 10, when a host device 12 such as host device 12-1 in user group U1 attempts to connect to network 8 via wireless communication link 18-1 and wireless access point 10-1, host device 12-1 may convey a Pre-Shared Key PSK1 that is unique to the user or PSK group to wireless access point 10-1. To authenticate the network connection of this host device 12-1, wireless access point 10-1 may convey the Pre-Shared Key PSK1 to provisioning server 104. Provisioning server 104 may provide an access accept message to wireless access point 10-1 to authenticate and approve the network access of host device 12-1.

Additionally, because access point 10-1 may be handling L2 traffic processing, provisioning server 104 may further provide device group information relevant to the L2 traffic of host device 12-1. As examples, provisioning server 104 may provide access point 10-1 with all of the MAC addresses of devices in the same user group as host device 12-1 (e.g., all host devices 12-1 in user group U1), may provide access point 10-1 with all of the shared device information in the shared group S1, and/or may provide access point 10-1 with any other relevant device group information. The relevant user group information may be conveyed from provisioning server 14 to one or more access points as part of the (network) access accept message or may be conveyed in a separate message based on other (non-RADIUS) ways for conveying data such as a message conveyed using an application programming interface (API) (e.g., in response to an API call (request) for the relevant group information), a message conveyed using Remote Procedure Calls (e.g., gRPC), etc. In one illustrative implementation, the relevant group information can be included in the vendor-specific attributes (VSAs) of the Access-Accept message sent to access point 10-1 as part of the RADIUS protocol.

In general, each access point may maintain user group information for user groups to which any recently or currently connected host device 12 belongs and for the shared device group. Some or all of the maintained device (user and/or shared) group information may be deleted periodically based on relevance of the information (e.g., if one or more host devices are no longer connected to network 8, a predetermined period of time has elapsed, the access point has been restarted, reset, reconfigured, etc.). The one or more access points may therefore serve as cache storage for the device group information, while the server database serves as more persistent or permanent storage of all device group information.

In the example of FIG. 10, host device 12-1 may receive frames such as frames 50 in FIG. 4A (e.g., frames from a host device in the shared group), frames 58 in FIG. 5A (e.g., frames from a gateway device), frames 66 in FIGS. 6A and 6B (e.g., frames from a device in the same user group), frames 74 in FIG. 8 (e.g., BUM frames from a device in the shared group), and replacement unicast frames 78A in FIG. 9B (e.g., replacement unicast frames that serve as replacements for or are converted from BUM frames from a device in the same user group) based on the device group information stored at access point 10-1. In particular, access point 10-1 may process these frames and perform forwarding for these types of frames to host device 12-1 in the same manner as described in connection with FIGS. 4A, 5A, 6A, 6B, 8, and 9A-9C based on the device group information stored at access point 10-1.

Access point 10-1 may also forward frames received from host device 12-1 such as frames 54 in FIG. 4B (e.g., frames destined for a device in the shared group), frames 62 in FIG. 5B (e.g., frames destined for a gateway device), and frames 66 in FIGS. 6A and 6B (e.g., frames destined for a device in the same user group) to their corresponding destinations based on the device group information stored at access point 10-1. Access point 10-1 may also convert BUM frames with the source MAC address of host device 12-1 into unicast frames that are then forwarded to devices in the same device group. In particular, access point 10-1 may process these frames and perform forwarding for these types of frames to their respective destinations in the same manner as described in connection with FIGS. 4B, 5B, 6A, 6B, and 9A-9C based on the device group information stored at access point 10-1.

In some instances, the device group information maintained at provisioning server 104 and/or the subset of information at access point 10-1 may be updated. FIG. 10 further shows an illustrative example with a new host device 12-1' which uses PSK1 to authenticate its network connection but is not yet included in the list of devices in group information 40 for user group U1.

In this example, similar to the authentication process for host device 12-1 in FIG. 10, when host device 12-1' attempts to connect to network 8 via wireless communication link 18-1' and wireless access point 10-2, host device 12-1' may convey a Pre-Shared Key PSK1 that is unique to the user or PSK group to wireless access point 10-2. To authenticate the network connection of this host device 12-1', wireless access point 10-2 may convey the Pre-Shared Key PSK1 to provisioning server 104. Provisioning server 104 may provide an access accept message to wireless access point 10-2 to authenticate and approve the network access of host device 12-1'. Additionally, provisioning server 104 may update group information 106, or more specifically, user group U1 information 40 to include host device 12-1' (e.g., the MAC address of host device 12-1 '). As similarly described in connection with access point 10-1 and host device 12-1, when host device 12-1' authenticates using PSK1 through access point 10-2, provisioning server 104 may send the group information 40 for U1 (updated with the MAC address of new host device 12-1') to access point 10-2.

Additionally, because user group U1 information 40 stored at provisioning server 104 has been updated, the stored versions of user group information U1 stored at one or more access points such as at access point 10-1 may differ from those at provisioning server 104. To reconcile this difference, provisioning server 104 may update access point 10-1 with the updated group information 40 for the user group U1 (that includes the MAC address of the new host device 12-1'). This may be done by including the MAC address for the new host and the U1 group to which it belongs in RADIUS CoA (Change of Authorization) messages as part of the RADIUS protocol, or if desired, via other asynchronous messages conveyed to access point 10-1 (e.g., messages sent independent of the access accept/reject messages).

In such a manner, whenever the user group, shared group, and/or other group information is updated (e.g., to add a new device to a group, remove an existing device from a group, etc.), such changes may be propagated to other access points to keep both the central storage of such information (e.g., at provisioning server 104) and the cache storage at one or more access point consistent.

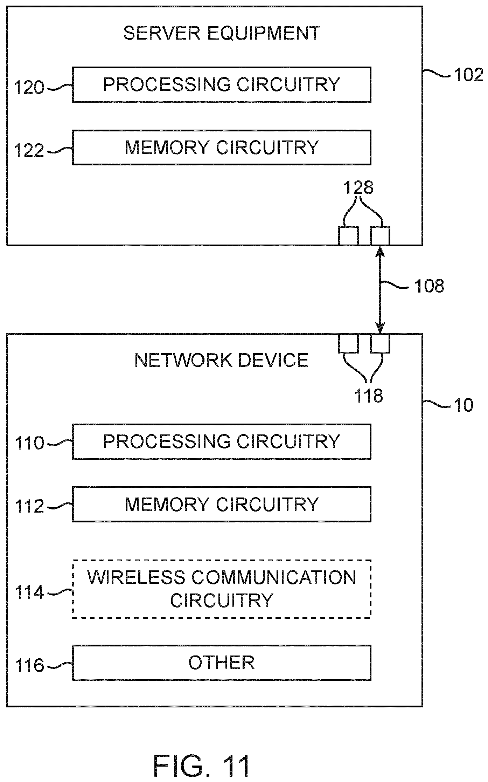

FIG. 11 is a diagram of illustrative hardware configurations for components such as a network device 10 (e.g., access points 10-1 and/or 10-2, or generally, one or more L2 network device 10) and server equipment (e.g., implementing provisioning server 104) for a networking system. As shown in FIG. 11, network device 10 (e.g., used to implement one or more network devices 10 and/or gateway device 16 in FIG. 1, as described in connection with FIGS. 1-10) may include processing circuitry 110, memory circuitry 112, optionally wireless communications circuitry 114 (e.g., in configurations in which network device 10 is a wireless access point or other types of wireless communication device), and other components 116 such as input-output interfaces or ports 118.

In particular, processing circuitry 110 may include one or more processors or processing units based on microprocessors on general-purpose processors, microcontrollers, digital signal processors, programmable logic devices, application specific system processors (ASSPs), application specific integrated circuit (ASIC) processors, etc.

Memory circuitry 112 may include volatile memory such as dynamic random-access memory, static random-access memory, etc., and non-volatile memory such as hard-drive storage, solid-state storage, flash memory, etc. As examples, memory circuitry 112 may store the device group information such as some of the information depicted in FIG. 3 and described in connection with FIG. 10 (e.g., cache only a portion of the most relevant device group information), L2 forwarding policy, configurations, and/or entries such as those described in connection with FIGS. 4-10, and/or other information that facilitates the processing of L2 frames.

In general, the operations described herein relating to the operation of the network device 10 and/or other relevant operations may be stored as (software) instructions on one or more non-transitory computer-readable storage media (e.g., memory circuitry 112) in network device 10. The corresponding processing circuitry (e.g., processing circuitry 110) in network device 10 for these one or more non-transitory computer-readable storage media may process the respective instructions to perform the corresponding network device operations. Some portions of processing circuitry 110 and some portions of memory circuitry 112, collectively, may sometimes be referred to herein as the control circuitry of network device 10 because the two are often collectively used to control one or more components of network device 10 to perform these operations (e.g., by sending and/or receiving requests, control signals, data, etc.).

In illustrative configurations in which network device 10 is a wireless access point and/or includes wireless communications functionalities, network device 10 may include wireless communication circuitry 114 to wirelessly communicate with host devices (e.g., host devices 12-1, 12-2, 12-3 in FIG. 1). Wireless communication circuitry 114 may include one or more radios (e.g., Wi-Fi radios), radio-frequency transceiver circuitry, radio-frequency front-end circuitry, and one or more antennas. The one or more radios may use the one or more antennas to transmit radio-frequency signals to and receive radio-frequency signals from one or more host devices 12 (FIG. 1). While wireless communication circuitry 114 is shown as a separate element from processing circuitry 110, this is merely illustrative. If desired, portions of wireless communication circuitry 114 (e.g., radio functionalities) may be implemented on portions of processing circuitry 110.

Network device 10 may include other components 116 such as one or more input-output interfaces or ports 118 such as Ethernet ports or other types of network interface ports that provided connections to other network elements (e.g., switches, routers, modems, controllers) in the network, power ports through which power is supplied to network 10, or other ports. In general, input-output components in network device 10 may include communication interface components that provide a Bluetooth^{®} interface, a Wi-Fi^{®} interface, an Ethernet interface (e.g., one or more Ethernet ports), an optical interface, and/or other networking interfaces for connecting network device 10 to the Internet, a local area network, a wide area network, a mobile network, other types of networks, and/or to another network device, peripheral devices, and/or other electronic components

If desired, other components 116 on network device 10 may include other input-output devices such as devices that provide output to a user such as a display device (e.g., one or more status lights) and/or devices that gather input from a user such as one or more buttons. If desired, other components 116 on network device 10 may include one or more sensors such as radio-frequency sensors. If desired, network device 10 may include other components 116 such as a system bus that couples the components of network device 10 to one another, to power management components, etc. In general, each component within network device 10 may be interconnected to the control circuitry (e.g., processing circuitry 110 and/or memory circuitry 112) in network device 10 via one or more paths that enable the reception and transmission of control signals and/or other data.

As shown in FIG. 11, server equipment 102 (e.g., implementing provisioning server 104 or generally storing and managing the distribution of user group information) may include processing circuitry 120, memory circuitry 122, and other components such as input-output interfaces or ports 128.

In particular, processing circuitry 120 may include one or more processors or processing units based on microprocessors on general-purpose processors, microcontrollers, digital signal processors, programmable logic devices, application specific system processors (ASSPs), application specific integrated circuit (ASIC) processors, etc. Memory circuitry 122 may include volatile memory such as dynamic random-access memory, static random-access memory, etc., and non-volatile memory such as hard-drive storage, solid-state storage, flash memory, etc. As an example, memory circuitry 122 may store the device group information such as all of the information depicted in FIG. 3 and described in connection with FIG. 10 (e.g., serve as a central storage of all of the device group information),

In general, the operations described herein relating to the operation of the provisioning server 104 and/or other relevant operations may be stored as (software) instructions on one or more non-transitory computer-readable storage media (e.g., memory circuitry 122) in server equipment 102. The corresponding processing circuitry (e.g., processing circuitry 120) in server equipment 102 for these one or more non-transitory computer-readable storage media may process the respective instructions to perform the corresponding network device operations. Some portions of processing circuitry 120 and some portions of memory circuitry 122, collectively, may sometimes be referred to herein as the control circuitry of provisioning server 104 because the two are often collectively used to control one or more components of computing equipment 102 to perform these operations (e.g., by sending and/or receiving requests, control signals, data, etc.).

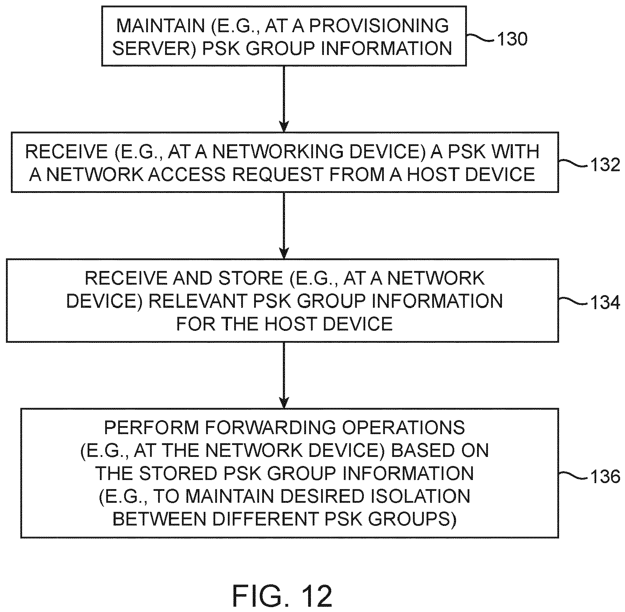

FIG. 12 is a flowchart of illustrative operations for performing (L2) forwarding at one or more network devices such as access points. These operations may be performed using one or more network devices and/or host equipment in a network such as one or more network devices 10 in network 8 in FIG. 1, wireless access points 10-1 and 10-2 and server equipment 102 or other host equipment in FIG. 10. The illustrative operations described in connection with FIG. 12 may generally be performed using control circuitry in the one or more network devices 10 (e.g., memory circuitry 112 in network device 10 and/or processing circuitry 110 in network device 10 by executing software instructions stored on memory circuitry 112 in network device 10, memory circuitry 122 in server equipment and/or processing circuitry 120 in server equipment 102 by executing software instructions stored on memory circuitry 122 in server equipment, etc.). If desired, one or more operations described in connection with FIG. 12 may be performed by other dedicated hardware components in network device 10 or server equipment 102 (e.g., wireless communication circuitry 114 and/or other components 116 in network device 10 of FIG. 11).

As shown in FIG. 12, at block 130, processing circuitry 120 in server equipment 102 may maintain user group or PSK group information at memory circuitry 122 for provisioning server 104. In particular, memory circuitry 122 may contain a device group database identifying MAC addresses of devices associated with each PSK and therefore each user (e.g., as described in connection with the device group information of FIGS. 3 and 10).

At block 132, processing circuitry 110 in network device 10 (e.g., a wireless access point) may receive a PSK with a network access request message from a host device (e.g., host device 12-1 in FIG. 10). The wireless access point may convey the network access request message and PSK to provisioning server 104 for authenticating the network connection.

Responsive to the access request message, provisioning server 104 may send an access accept message. The access accept message may include user group or PSK group information such as the list of other host devices in the same user or PSK group and the list of shared devices in the network (e.g., in a shared device group).

At block 134, processing circuitry 110 in network device 10 may receive the relevant PSK group information for the host device including the shared group information (e.g., in the access accept message). Memory circuitry 112 in network device 10 may store the relevant device group information for the host device.

At block 136, processing circuitry 110 in network device 10 may perform (L2) forwarding operations based on the stored (user and shared) device group information (e.g., to maintain desired isolation between different PSK or user groups). In particular, network device 10 may process frames of the types described in connection with FIGS. 4-9 in the manner described based on the locally stored device group information (e.g., a portion of the information in FIG. 3) to exhibit the L2 forwarding characteristics described in connection with FIG. 2.

The methods and operations described above in connection with FIGS. 1-12 may be performed by the components of one or more network devices and/or server or other host equipment using software, firmware, and/or hardware (e.g., dedicated circuitry or hardware). Software code for performing these operations may be stored on non-transitory computer readable storage media (e.g., tangible computer readable storage media) stored on one or more of the components of the network device(s) and/or server or other host equipment. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of the network device(s) and/or server or other host equipment (e.g., processing circuitry 110 in network device 10 of FIG. 11, processing circuitry 120 in server equipment 102 in FIG. 11, etc.).

In accordance with an embodiment, a method of providing group-to-group isolation is provided that includes storing a first Media Access Control (MAC) address of a first host device that authenticates for network access using a first key, storing a first indication that the first MAC address is in a first group defined by the first key, storing a second MAC address of a second host device that authenticates for network access using a second key, storing a second indication that the second MAC address is in a second group defined by the second key, receiving, at a network device, a frame having a source MAC address and a destination MAC address and dropping, at the network device, the frame based at least in part on comparing the source MAC address of the frame with at least one of the first MAC address or the second MAC address, and comparing the destination MAC address of the frame with at least the other one of the first MAC address or the second MAC address.

In accordance with another embodiment, the first and second host devices are in a same virtual local area network domain.

In accordance with another embodiment, the first key is unique to a first user and the second key is unique to a second user.

In accordance with another embodiment, the network device includes a wireless access point, the first key includes a first Pre-Shared Key (PSK) for authenticating a first wireless connection to a wireless network portion identifiable by a service set identifier, and the second key includes a second PSK for authenticating a second wireless connection to the wireless network portion.

In accordance with another embodiment, the method includes receiving the first MAC address and the first indication from a provisioning server that authenticates network access.

In accordance with another embodiment, the first MAC address and the first indication are received in a message from the provisioning server, the message includes a list of MAC addresses of host devices that authenticate for network access using the first key.

In accordance with another embodiment, the message includes an additional list of MAC addresses of host devices in a shared device group.

In accordance with another embodiment, the message is a network access accept message.

In accordance with an embodiment, a method of operating a wireless access point is provided that includes conveying a user-specific Pre-Shared Key (PSK) for a host device to an authentication system configured to authenticate a network connection for the host device, obtaining a message containing PSK group information identifying a list of devices that use the user-specific PSK for authenticating corresponding network connections and processing layer 2 (L2) frames from the host device based on the PSK group information.

In accordance with another embodiment, the message includes shared group information identifying an additional list of devices in a shared device group and processing the L2 frames is further based on the shared group information.

In accordance with another embodiment, the PSK group information includes a first list of hardware addresses of devices in the list of devices and the shared group information includes a second list of hardware addresses of devices in the additional list of devices.

In accordance with another embodiment, processing the L2 frames includes comparing a source hardware address of a received L2 frame to one or more hardware addresses identified by the second list of hardware addresses in the shared group information.

In accordance with another embodiment, processing the L2 frames includes comparing a destination hardware address of a received L2 frame to one or more hardware addresses identified by the second list of hardware addresses in the shared group information.

In accordance with another embodiment, processing L2 frames includes dropping a first L2 frame between host devices in different PSK groups.

In accordance with another embodiment, processing L2 frames includes forwarding a second L2 frame between host devices in a same PSK group.

In accordance with another embodiment, processing L2 frames includes forwarding a third L2 frame destined to or sourced from a shared host device in a shared group.

In accordance with another embodiment, the message includes shared group information identifying an additional list of devices in a shared device group and processing L2 frames includes dropping a first broadcast, unknown unicast, or multicast (BUM) L2 frame from a first device identified in the PSK group information and outputting one or more unicast L2 frames having source and destination hardware addresses in a same PSK group as the first device, and forwarding a second BUM L2 frame from a second device identified in the shared group information.

In accordance with an embodiment, one or more non-transitory computer-readable storage media is provided that includes computer-executable instructions that, when executed by one or more processors for a network device, cause the one or more processors to maintain device group information that includes first and second user groups each identifying a list of host devices belonging to the user group and a shared device group identifying a list of shared host devices and process a plurality of frames from a first host device identified in the first user group based on the maintained device group information by dropping a first frame destined for a second host device identified in the second user group, forwarding a second frame destined for a third host device identified in the first user group, and forwarding a third frame destined for a shared host device identified in the shared device group.

In accordance with another embodiment, the one or more non-transitory computer-readable storage media includes computer-executable instructions that, when executed by one or more processors for the network device, cause the one or more processors to receive additional device group information from a provisioning server and update the maintained device group information based on the additional received device group information.

In accordance with another embodiment, the network device includes a wireless access point.

The foregoing is merely illustrative and various modifications can be made to the described embodiments. The foregoing embodiments may be implemented individually or in any combination.

## Claims

1. A method of providing group-to-group isolation comprising:
storing a first Media Access Control (MAC) address of a first host device that authenticates for network access using a first key;
storing a first indication that the first MAC address is in a first group defined by the first key;
storing a second MAC address of a second host device that authenticates for network access using a second key;
storing a second indication that the second MAC address is in a second group defined by the second key;
receiving, at a network device, a frame having a source MAC address and a destination MAC address; and
dropping, at the network device, the frame based at least in part on:
comparing the source MAC address of the frame with at least one of the first MAC address or the second MAC address, and
comparing the destination MAC address of the frame with at least the other one of the first MAC address or the second MAC address.

2. The method of claim 1, wherein the first and second host devices are in a same virtual local area network domain.

3. The method of claim 1, wherein the first key is unique to a first user and wherein the second key is unique to a second user.

4. The method of claim 3, wherein the network device comprises a wireless access point, wherein the first key comprises a first Pre-Shared Key (PSK) for authenticating a first wireless connection to a wireless network portion identifiable by a service set identifier, and wherein the second key comprises a second PSK for authenticating a second wireless connection to the wireless network portion.

5. The method of claim 1 further comprising:
receiving the first MAC address and the first indication from a provisioning server that authenticates network access.

6. The method of claim 5, wherein the first MAC address and the first indication are received in a message from the provisioning server, wherein the message comprises a list of MAC addresses of host devices that authenticate for network access using the first key.

7. The method of claim 6, wherein the message comprises an additional list of MAC addresses of host devices in a shared device group.

8. The method of claim 7, wherein the message is a network access accept message.

9. One or more non-transitory computer-readable storage media comprising computer-executable instructions that, when executed by one or more processors for a network device, cause the one or more processors to:
maintain device group information that includes first and second user groups each identifying a list of host devices belonging to the user group and a shared device group identifying a list of shared host devices; and
process a plurality of frames from a first host device identified in the first user group based on the maintained device group information by:
dropping a first frame destined for a second host device identified in the second user group,
forwarding a second frame destined for a third host device identified in the first user group, and
forwarding a third frame destined for a shared host device identified in the shared device group.

10. The one or more non-transitory computer-readable storage media of claim 9 further comprising computer-executable instructions that, when executed by one or more processors for the network device, cause the one or more processors to receive additional device group information from a provisioning server and update the maintained device group information based on the additional received device group information.

11. The one or more non-transitory computer-readable storage media of claim 10, wherein the network device comprises a wireless access point.

12. The one or more non-transitory computer-readable storage media of claim 9, wherein the first frame is processed by identifying a source hardware address of the first frame as belonging to a host device in the list of host devices of the first user group and by identifying a destination hardware address of the first frame as belonging to a host device not in the list of host devices of the first user group.

13. The one or more non-transitory computer-readable storage media of claim 9, wherein the second frame is processed by identifying a source hardware address of the first frame as belonging to a host device in the list of host devices of the first user group and by identifying a destination hardware address of the first frame as belonging to another host device in the list of host devices of the first user group.

14. The one or more non-transitory computer-readable storage media of claim 9, wherein the second frame is processed by identifying a source hardware address of the first frame as belonging to a host device in the list of host devices of the first user group and by identifying a destination hardware address of the first frame as belonging to a host device in the list of shared host devices of the shared device group.

15. The one or more non-transitory computer-readable storage media of claim 9, wherein the first user group is associated with a first key for authenticating network access of any host device in the list of host devices of the first user group and wherein the second user group is associated with a second key for authenticating network access of any host device in the list of host devices of the second user group.
